# EUROPEAN PATENT APPLICATION

(11) **EP 0 668 174 A1**
(43) Date of publication of application: **23.08.1995**
(21) Application number: 95200005.7
(22) Date of filing: 04.01.1995
(51) Int. Cl.: B60C 15/024

(54) **Bicycle tyre**

(30) Priority: 21.02.1994 NL 9400252
(71) Applicant: Vredestein Fietsbanden B.V., NL-7005 AL Doetinchem (NL)
(72) Inventor: Slaaf, Jacob Fredricus, NL-7313 BL Apeldoorn (NL)
(74) Representative: Lips, Hendrik Jan George, Ir.

(57) **Abstract**

Bicycle tyre comprising a tread with profile (3) and two lateral surfaces (2) of which the free edges (4) are provided with a reinforcement (5) for clamping the tyre onto the rim (7) of a bicycle wheel. The sections of the lateral surfaces (2) running along the circumferential direction of the tyre, which sections are positioned at the rim edge (6) when the tyre is in an assembled state, are thickened or stiffened. To that end, each of the lateral surfaces (2) of the tyre may be provided with a strip (8) of resilient material, such as rubber, which strip protrudes beyond the lateral surface of the tyre for forming a collar (9), with which the strip (8) rests on the rim edge (6). Also, a stiffening strip may be applied to the inside of the lateral surfaces or a filling strip or a stiffening sheet may be applied in the lateral surfaces.

## Description

The invention relates to a bicycle tyre, in particular to an outer tyre for bicycles, which comprises a tread with profile and two lateral surfaces of which the free ends are provided with a reinforcement for clamping the tyre onto the rim of a bicycle wheel.

It is generally known that an inner tube of a bicycle may puncture because of its being ridden over a more or less sharp and hard object, such as e.g. a stone, threshold or curb.

In this process even two holes or tears, also known as "snake bites," may occur in the inner tube.

It is known that these holes will occur particularly because the inner tube is compressed between the sections of the tyre which are pressed towards each other and against the rim edge by the particular object. In the process the tyre is coved around the edge of the rim and pressed against the rim edge. Just like the object, this edge is hard since the rim is usually made of metal.

The invention has the objective of decreasing the possibility of the occurrence of holes in the inner tube, and to that end it provides in that the sections of the lateral surfaces of the tyre running along the circumferential direction of the tyre, which sections are positioned at the rim edge when the tyre is in an assembled state, are thickened or stiffened.

An thickening or stiffening can be obtained e.g. by applying a strip of resilient material, such as rubber, which strip runs along the longitudinal direction of the tyre, to each of the lateral surfaces of the tyre, positioned at the sections of the lateral surfaces which are positioned in the vicinity of the rim edge, whereby the strip, at least on its side directed towards the rim edge, protrudes beyond the lateral surface of the tyre for forming a collar, such that the strip rests on the rim edge with this collar.

Through this, it is achieved that when the tyre is compressed when it is being ridden over a sharp or hard object, more rubber will be positioned between the rim edge and the inner tyre, so that the inner tyre will be less strained. Because the strip will also stiffen the lateral surface of the tyre to a certain extent, this, too, will less easily be fully compressed.

It is also possible to incorporate a strip of resilient material in the rubber of each of the lateral surfaces of the tyre positioned at the sections of the lateral surfaces which are positioned near the rim edge.

These measures allow the strain which is exerted by the rim edge on the tyre to be distributed across a larger surface so that the inner tyre, when being ridden over a sharp or hard object such as a threshold or a curb, will be subjected to a lesser strain.

In the application of the filling strips, the material of which these are made should preferably have a greater stiffness than that of the rubber of the tyre. With that the strains exerted on the inner tyre when the tyre is ridden over a sharp or hard object, will be further reduced.

A similar effect may also be achieved by applying a strip of resilient though stiff material, such as rubber or a similar material, to the insides of each of the lateral surfaces of the tyre.

A stiffening of the sections of the lateral surfaces of the tyre may also be obtained by applying stiff, sheet-like strips such as those made of plastics or metal, to or in the rubber thereof.

Through this, the tyre will be less easily fully pressed flat against the rim edge with the inner tube being between the flattened sections when the tyre is ridden over a sharp or hard object.

The invention is further illustrated by means of exemplary embodiments, which are shown in the drawings, in which:
Figure 1 schematically depicts a sectional view of a bicycle tyre according to the present invention, with the accompanying section of a rim;
Figure 2 depicts a magnified section of Figure 1; and
Figures 3, 4 and 5 depict sections corresponding to Figure 2, though of three further embodiments of a bicycle tyre according to the invention.

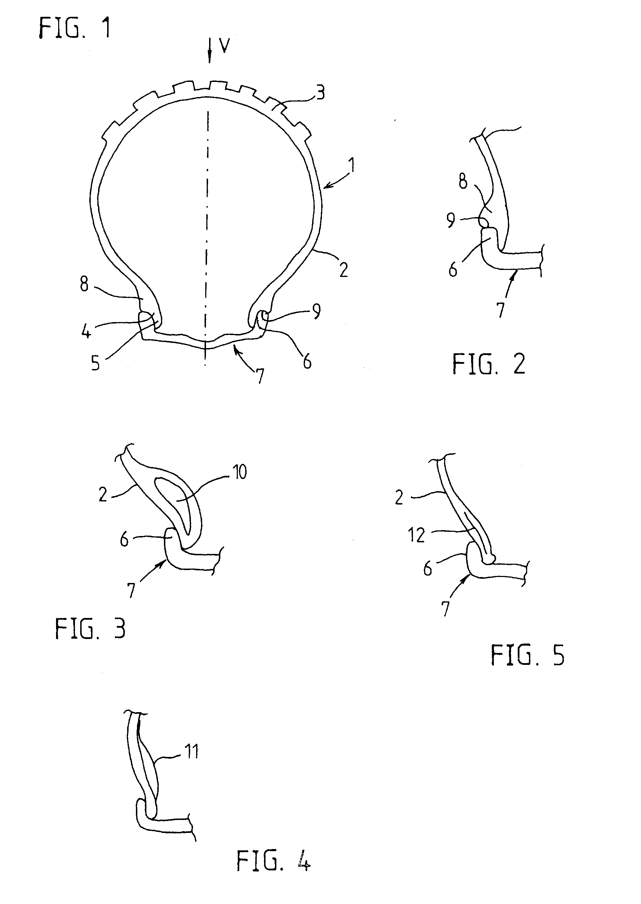

Figure 1 depicts a sectional view of a bicycle tyre 1 which comprises lateral surfaces 2 and profiled tread 3. The lateral surfaces 2 are provided with conventional reinforcement 5, with which the tyre is clamped in edge 6 of rim 7, at their free edges 4.

Each lateral surface 2 of tyre 1 is provided with a strip 8 which protrudes beyond lateral surface 2 of the tyre at the side directed towards the rim edge. Through this, a collar 9 is formed which rests on rim edge 6, as can be seen in greater detail in Figure 2.

Figure 3 illustrates the possibility of incorporating a filling strip 10 in lateral surface 2 of tyre 1. This filling strip 10 may comprise rubber which preferably has a stiffness greater than that of the rubber of the further sections of the tyre

Figure 4 depicts the application of a stiffening strip 11 on the inside of the lateral surface of the bicycle tyre, which strip in particular will comprise rubber with a stiffness greater than that of the rubber of the further sections of the tyre.

Figure 5 illustrates the possibility of incorporating a stiffening 12 in lateral surface 2, which stiffening may e.g. be formed by a sheet-like strip of plastic or metal. When the tyre is compressed, as indicated by arrow 5 in Figure 1, then the sections of the tyre will less easily abut each other so that the inner tyre -which is not shown- will not be pressed completely flat.

It will be apparent that only a few possible embodiments of a bicycle tyre according to the invention have been illustrated in the drawings and have been described above, and that several modifications can be envisaged which lie within the spirit and scope of the invention.

## Claims

1. Bicycle tyre, in particular a tyre comprising a tread with profile (3) and two lateral surfaces (2) of which the free edges (4) are provided with a reinforcement (5) for clamping the tyre onto the rim (7) of a bicycle wheel, characterized in that the sections of the lateral surfaces (2) of the tyre running along the circumferential direction of the tyre, which sections are positioned at the rim edge (6) when the tyre is in an assembled state, are thickened or stiffened.

2. Bicycle tyre according to Claim 1, characterized in that a strip (8) of resilient material, such as rubber, which strip runs along the longitudinal direction of the tyre, is applied to each of the lateral surfaces (2) of the tyre, positioned at the sections of the lateral surfaces which are positioned in the vicinity of the rim edge (6), whereby the strip, at least on its side directed towards the rim edge (6), protrudes beyond the lateral surface of the tyre for forming a collar (9), such that the strip (8) rests on the rim edge (6) with this collar (9).

3. Bicycle tyre according to Claim 1, characterized in that a filling strip (10) of resilient material is incorporated in the rubber of each of the lateral surfaces (2) of the tyre positioned at the sections of the lateral surfaces (2) located near the rim edge (6).

4. Bicycle tyre according to Claim 3, characterized in that the material of the filling strip (10) has a stiffness greater than that of the rubber of the tyre.

5. Bicycle tyre according to Claim 1, characterized in that a strip (11) of a resilient though stiff material, such as rubber, is applied to the inside of each of the lateral surfaces of the tyre.

6. Bicycle tyre according to Claim 1, characterized in that the lateral surfaces (2) of the tyre are stiffened with stiff, sheet-like strips (12), such as of plastic or metal, applied to or incorporated in the rubber thereof.
